# NEW EUROPEAN PATENT SPECIFICATION

(11) **EP 2 177 482 B2**
(45) Date of publication and mention of the opposition decision: **12.02.2020**
(45) Mention of the grant of the patent: 30.03.2011
(21) Application number: 09171919.5
(22) Date of filing: 01.10.2009
(51) Int. Cl.: C03B 33/033, C03B 33/07

(54) **Method for cutting laminated glass sheets**
Verfahren um Verbundglasscheibe zu Schneiden
Procédé de découpe de feuilles de verre laminées

(30) Priority: 14.10.2008 IT TO20080753
(43) Date of publication of application: 21.04.2010
(73) Proprietor: BIESSE S.p.A., 61100 Pesaro (IT)
(72) Inventor: Aimar, Giacomo, 61100 Pesaro Urbino (IT); Sideri, Paolo, 61100 Pesaro Urbino (IT)
(74) Representative: Notaro, Giancarlo

(56) References cited:
- EP-A- 0 503 647
- EP-A- 1 334 953
- EP-A2- 0 503 647
- EP-A2- 1 044 930
- CH-A5- 683 917
- DE-U1- 9 313 591
- DE-U1- 20 220 732
- JP-A- 2006 256 907
- US-A- 5 944 244
- US-A1- 2007 158 381

## Description

The present invention refers to a method for cutting laminated glass sheets.

In particular, the invention regards a method for cutting a laminated glass sheet along predetermined lines, wherein the sheet comprises an upper glass sheet, a lower glass sheet and an intermediate film made of synthetic plastic material, the method comprising the following steps:
- making an incision on both glass sheets along a predetermined cutting line, the incision being performed by means of passing respective disc cutters across the glass sheet, the cutters being moved simultaneously in a first direction along the cutting line,
- moving a pressure roller across the upper glass sheet in the opposite direction with respect to the previous one, so as to cause the lower glass sheet to break off,
- raising a first portion of the laminated sheet which is on one side of the cutting line through upward displacement of the support means which cooperate with the lower glass sheet,
- exerting a predetermined downward pressure against a second portion of the laminated sheet, which is on the opposite side of the cutting line with respect to the first portion, by means of a pressure element brought into cooperation with the upper glass sheet of the second portion so as to cause the upper sheet to break off, and
- cutting the intermediate film through localised heating performed along the cutting line.

A similar method for cutting laminated glass sheets is known for example from EP 0 503 647 B1. In such known solution, after raising the first portion of the sheet using the above mentioned support means, such first portion is clamped by means of a first clamping member on the upper surface thereof, so as to allow the subsequent breaking off of the lower glass sheet by means of the pressure element operating on the second portion of the sheet. Therefore, such solution is relatively complex. US 5,944,244, CH 683 917 A5, EP 1 334 953 A2 and US 2007/0158381 A1 disclose cutting glass sheets using suction cups.

The object of the present invention is thus to provide a method of the type described above, such method being easy to implement, inexpensive and capable of simultaneously guaranteeing maximum efficiency, functionality and versatility.

In order to obtain such aim the invention has the object of providing a method for cutting laminated glass sheets having the characteristics of Claim 1.

Preferably, the suction cup holding means are borne by a stationary structure and the raising of the pushing means causes the bending deformation of the part of the sheet that protrudes beyond the suction cup holding means.

Alternatively, the suction cup holding means may be vertically moveable together with the pushing means to raise the lower surface of the first portion upwards.

In a preferred embodiment the series of suction cups is borne by a bar which extends parallel to the cutting line and which is positioned downstream of the latter on the side of the first portion of the sheet.

The invention will now be described, by way of non-limiting example only, with reference to the figures of the attached drawings, wherein:
- figure 1 is a perspective view of a machine for implementing the method according to the invention,
- figure 2 is an enlarged scale and partially sectioned perspective view of a detail of the machine of figure 1,
- figures 3 to 7 are schematic views illustrating various steps of the method according to the invention,
- figures 3A to 7A are enlarged scale schematic sections of details of the respective figures 3 to 7.

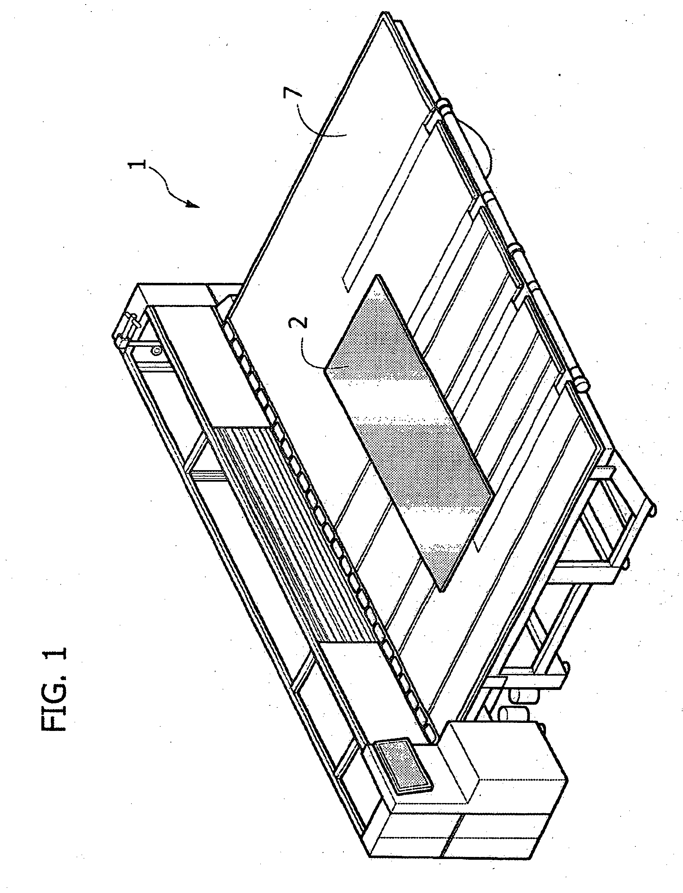

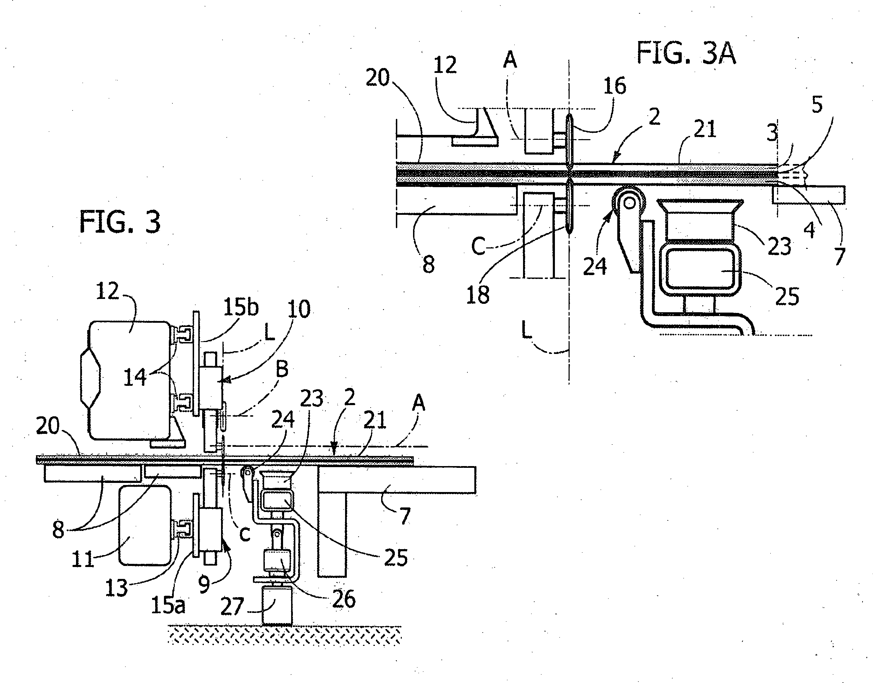

With reference to figure 1 a machine for cutting a laminated glass sheet 2 is indicated in its entirety with reference 1. The sheet 2 comprises an upper glass sheet 3, a lower glass sheet 4 and an intermediate film 5 made of synthetic plastic material, the intermediate film being interposed between the two glass sheets 3 and 4 (see for example figure 3A). In the figures, the proportions between the thicknesses of the glass sheets 3 and 4 and the intermediate film 5 are exaggerated with the sole aim of making the figures in question clearer.

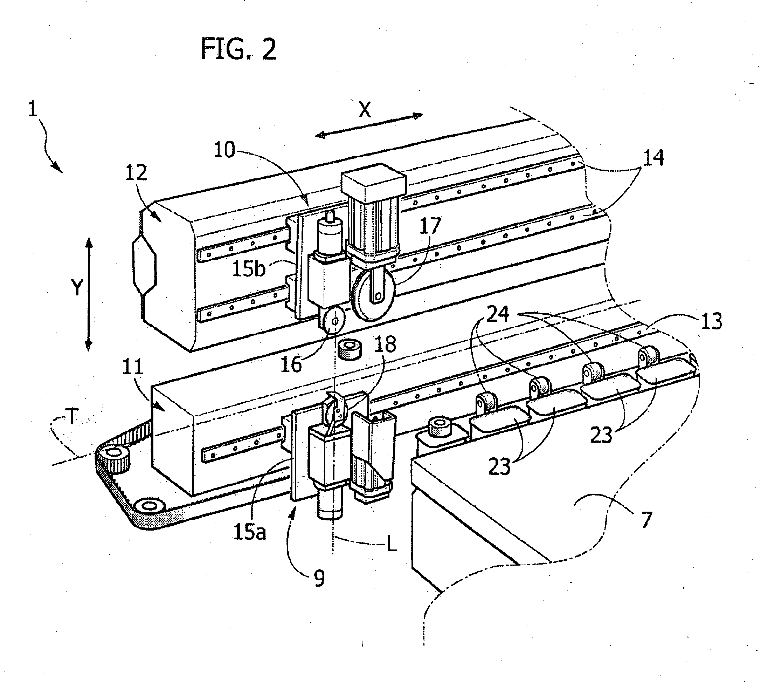

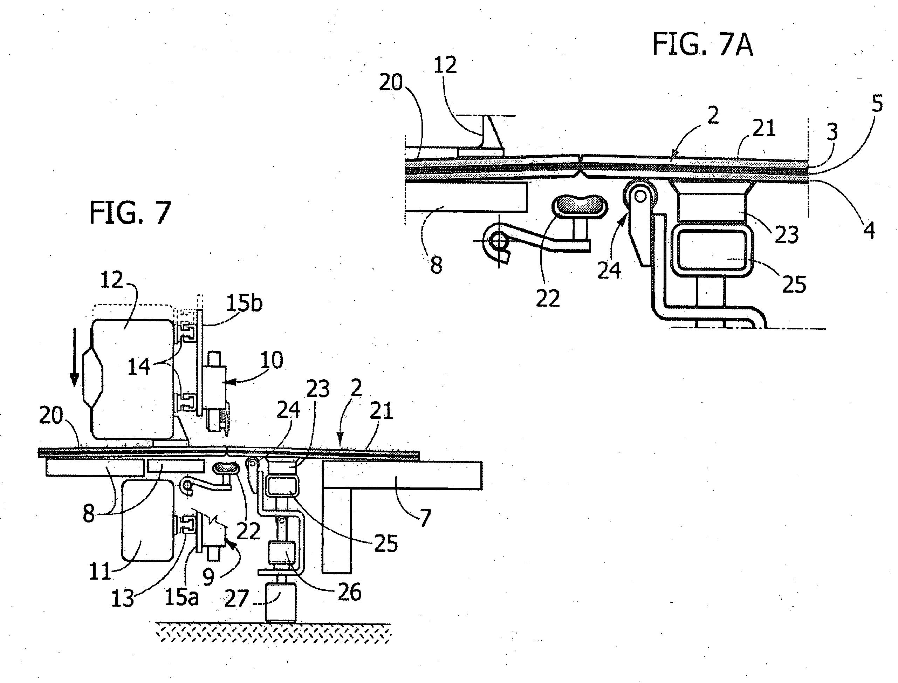

With reference to figure 2, the machine 1 comprises two support tables 7 and 8 arranged adjacent and coplanar with respect to each other, defining a plane for supporting the laminated sheet 2 to be cut, a lower cutting head 9, located beneath the support plane defined by the tables 7 and 8, and an upper cutting head 10, located above the support plane defined by the tables 7 and 8. Each head 9 or 10 is borne in a known manner by a respective support structure 11, 12 and it is moveable in the horizontal direction X parallel to the plane of the tables 7, 8 along respective guides 13, 14 which are also parallel to the cutting line T. Mounted sliding on the guides 13, 14 are respective motor-driven carriages 15a and 15b. Furthermore, the two cutting heads 9 and 10 are vertically moveable along direction Y on the carriages 15a and 15b. The support structure 11 is fixed to the floor, while the support structure 12 which bears the upper cutting head 10 is vertically moveable along direction Y to come into contact with the upper glass sheet 3 (figure 7).

The carriage 15b of the upper cutting head 10 is provided - in a known manner - with a disc cutter 16, also known as incision wheel, which is borne in a rotating manner around an axis A substantially perpendicular to the respective guide 14 and parallel to the support plane defined by the tables 7, 8, and with a pressure roller 17 borne in a rotating manner around an axis B parallel to that of the disc cutter 16. The pressure roller 17 is located in front or behind the incision wheel 16 and can be separately controlled, in a per se known manner, with respect to the incision wheel 16.

The carriage 15a of the lower cutting head 9 is instead provided, in a per se known manner, with only one incision wheel 18 similar to the incision wheel 16 and located in correspondence of the same, rotating around an axis C parallel to axis A.

It should be observed that in this manner, the wheels 16, 17 and 18 are all located along the cutting line T of the sheet 2 (see figure 2), whose position is indicated in figures 3 to 7 by an axis L perpendicular to the cutting line T.

In the present description and in the attached drawings, the construction details regarding the cutting machine 1, the cutting heads 9, 10, how the cutting heads 9, 10 are mounted moveable on the support structures 11, 12, the carriages 15a and 15b and how they are mounted sliding along the guides 13, 14, the incision wheels 16 and 18 and the pressure roller 17 and how they are mounted moveable on the respective carriages 15a and 15b are not illustrated, in that they may be obtained in any known manner. Same case applies to how the movements of the cutting heads 9, 10, the carriages 15a and 15b, and the wheels 16, 17 and 18 are controlled. Such movements, according to the known art are controlled through respective electric motors and drive transmissions neither illustrated nor described. Furthermore, still according to the known art, the electric motors that actuate the various moveable parts of the machine 1 are controlled by programmable electronic control means to allow performing predetermined work cycles on the sheets 2 to be worked.

Furthermore, for the detailed description of the common parts reference may be made to the description of patent EP 0 503 647 B1.

At the end of the work cycle, the laminated glass sheet 2 is cut, along the cutting line T, into two portions 20 and 21 respectively located downstream and upstream of the cutting line T.

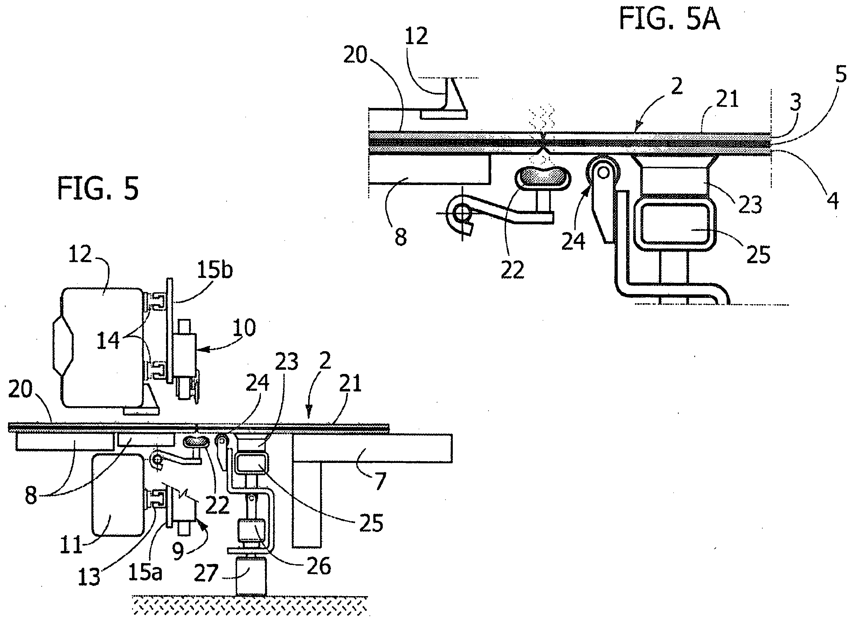

In order to cut the intermediate film 5 through localised heating along the cutting line T, the machine 1 further comprises a heating resistor 22 (see figure 5A). The resistor 22 is borne in an oscillating manner by the support structure 11 beneath the support table 8 in a per se known manner and it is controlled for example by an actuator (not illustrated). The heating resistor 22 is moveable between a rest position in which it lies beneath the support table 8 far from the cutting line T and an operating position (illustrated in figure 5A) in which it lies in the empty space section present between the two support tables 7 and 8 aligned with the cutting line T to heat the intermediate film 5 made of plastic material. The resistor 22 may be activated in the step of breaking off the upper glass sheet 3, in such a manner to reduce the working time to the minimum.

With particular reference to figure 2, the machine 1 further comprises a plurality of suction cups 23 aligned and arranged adjacent to the support table 7 lower with respect to the plane of the latter. The suction cups 23 communicate with a source of vacuum (not illustrated) and they are borne by a bar 25 (visible in section for example in figure 3) which extends in direction X, or parallel to the cutting line T. The bar 25 is positioned downstream of the cutting line T on the part of the first portion 21 of the sheet 2. The bar 25 is moveable between a rest position, in which the suction cups 23 are maintained spaced between the glass sheet 2, and a work position, in which the suction cups come into contact with the lower sheet 4 of the glass sheet 2 and hold it in position. An actuator 26 moves the bar 25 between its rest position and its work position.

Furthermore, associated to the suction cups 23 are freely rotatable rollers 24 used as pushing means. The pushing rollers 24 are aligned with respect to each other and are positioned between the suction cups 23 and the cutting line T, always beneath the plane defined by the support table 7. In the example illustrated in the figures, associated to each suction cup 23 is a respective idle roller 24, but the number may vary. The pressure rollers 24 are moveable - due to an actuator 27 - between a rest position, wherein they are spaced from the sheet 2, and an operative position, wherein they are moved vertically upwards to engage the lower surface 4 of the first portion 21 of the sheet 2 and raise it upwards so as to obtain the breaking off of the upper glass sheet 3.

In a first case, illustrated in the figures, the bar bearing the suction cups 23 is borne by a stationary structure which maintains the suction cups at the level of the plane defined by the tables 7 and 8 and the raising of the freely rotatable rollers 24, controlled by the actuator 27, causes the bending deformation of the part of the sheet 21a that protrudes beyond the suction cups 23.

Furthermore, there is a second possibility, not illustrated, wherein the suction cups 23 are moveable vertically together with the pressure rollers 24 and cooperate with the latter to raise the lower surface 4 of the first portion 21 upwards and obtain the breaking off of the upper glass sheet 3.

With reference to figures 3 to 7 and to the respective enlargement of their portions illustrated in figures 3A to 7A following is a description of the various steps of the method according to the invention.

In a first step (figure 3 and 3A) the cutting heads 9 and 10 are moved vertically with respect to the carriages 15a and 15b, upwards and downwards respectively, in such a manner to bring the two incision wheels 18 and 16 onto the cutting line T at contact with the sheet 2 to be cut. By moving simultaneously and in a first direction the two carriages 15a and 15b in the horizontal direction X along the guides 13 and 14, partial incision is made on both glass sheets 3 and 4 by pressing and sliding the respective disc cutters 18, 16 on the glass sheets 3 and 4. In such step, the pressure roller 17 is maintained raised and does not come into contact with the upper sheet 3.

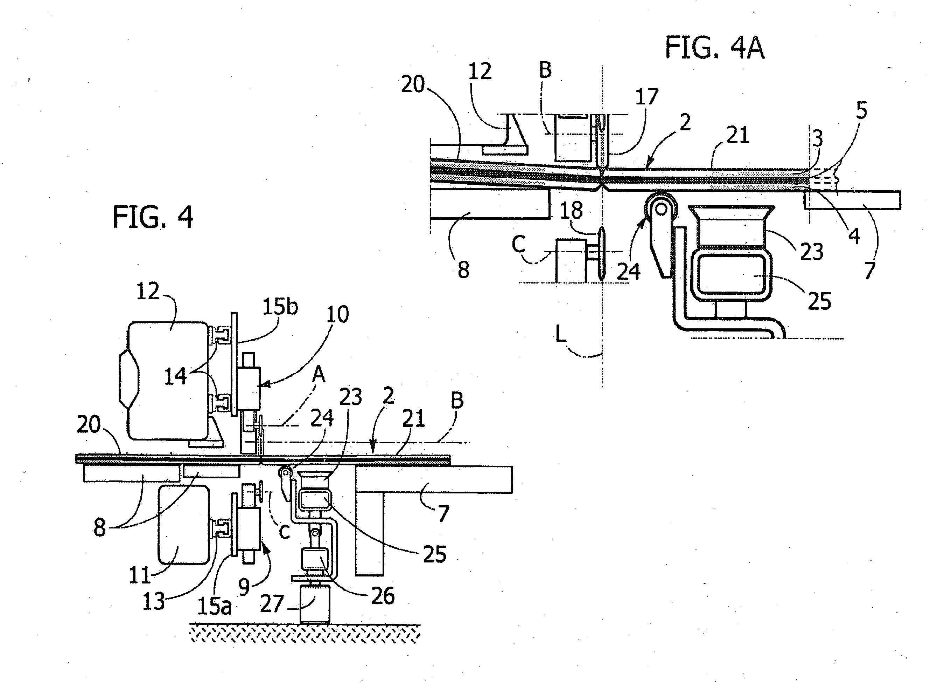

In a second step (figure 4 and 4A) the two carriages 15a and 15b are moved horizontally on the guides 13, 14 in the direction opposite to the previous one. During this step, the incision wheels 16 and 18 are in a raised position and do not interfere with the sheet 2, while the pressure rollers 17 exert pressure on the upper sheet 3 in such a manner to generate the breaking off of the lower glass sheet 4.

In a third step (figure 5 and 5A) the heating resistor 22 is carried in its operative position to heat the intermediate film 5. In this step, the empty space section present between the two support tables 7 and 8 and beneath the latter, is unoccupied and so the resistor 22 may be positioned at the height of the cutting line T. This third step may be possibly performed simultaneously with the second step to save time. Furthermore, during this third step, the suction cups 23 are moved upwards by means of the actuator 26 and engage and hold the lower surface of the first portion 21 of the glass sheet 2.

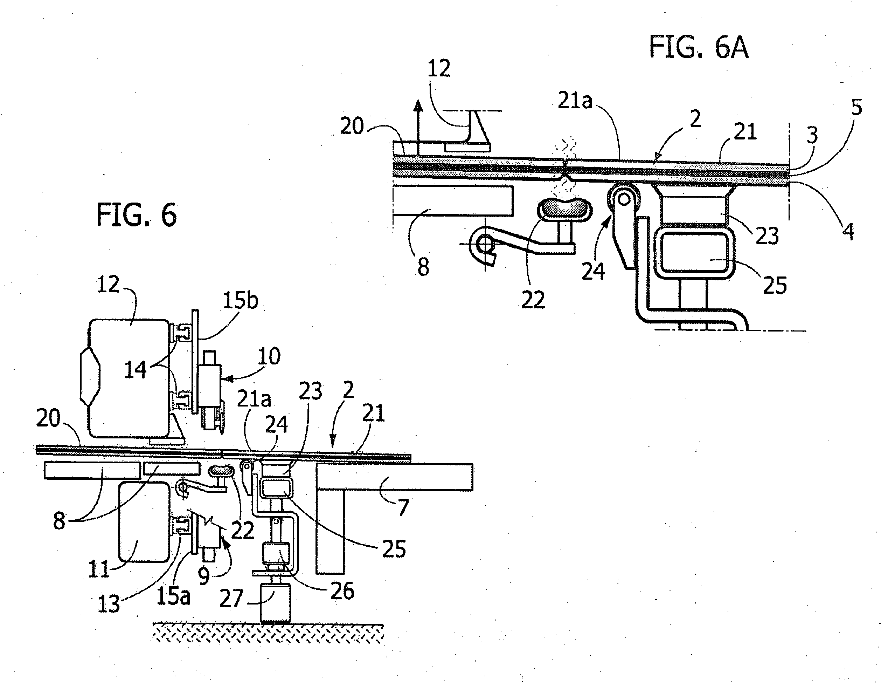

In a fourth step (figures 6 and 6A) the first portion 21 of the sheet 2 is raised in an oblique manner through the upward movement of the pushing rollers 24 which cooperate with the lower glass sheet 4 moving to the position illustrated in figure 6A. The portion 21 is thus raised with respect to the plane defined by the support table 7 and is subjected to a bending deformation in its portion 21a that protrudes beyond the suction cups 23. La first portion 21 also bears the second portion 20 which is also still connected thereto through the intermediate film 5 and the upper sheet 3.

Lastly, in a fifth step (figures 7 and 7A) the support structure 12 is descended and brought into cooperation with the upper glass sheet 3 of the second portion 20 to exert a predetermined pressure downwards to push the second portion 20 against the support table 8, so as to cause the upper sheet to break off 3. At the end of this step, the two portions 20 and 21 are still connected to each other through the intermediate film 5 which in the meanwhile was heated by the resistor 22. Such intermediate film 5 may at this point be cut through any known means, for example by means of an incision wheel or cutter. In this step, the presence of the suction cups 23 is used to move away portion 21 from 20 which is in turn held still by the structure 12 pressing it against the support plane 8.

## Claims

1. A method for cutting a laminated glass sheet (2) along predetermined lines, the sheet including an upper glass sheet (3), a lower glass sheet (4) and an intermediate film (5) of synthetic plastics material, said method including the following steps:
- making incisions in both glass sheets (3, 4) along a predetermined cutting line (T), the incisions being effected by the passage of respective disc cutters (16, 18) across the glass sheets (3, 4), the cutters (16, 18) being moved simultaneously in a first direction along the cutting line (T);
- moving a pressure roller (17) across the upper glass sheet (3) in the opposite direction from the previous movement and so as to cause the lower glass sheet (4) to break off;
- raising a first portion (21) of the laminated sheet (2) which is on one side of the cutting line (T) by means of the upwardly displacement of support means (23, 24) which cooperate with the lower glass sheet (4);
- exerting a predetermined pressure downwardly against a second portion (20) of the laminated sheet (2) which is on the opposite side of the cutting line (T) from the first portion (21) by means of a pressure element (12) brought into cooperation with the upper sheet (3) of the second portion (20) so as to cause the upper sheet (3) to break off; and
- cutting the intermediate film (5) by localised heating (22) thereof along the cutting line (T), **characterized in that**
- before said raising step of the first portion (21) of the laminated glass sheet (2), the lower surface of said first portion (21) is engaged by suction cup holding means (23)
- **in that** associated to said suction cup holding means (23) there are pushing means (24), vertically movable for engaging said lower surface of the first portion (21) and raising it upwardly,
- **in that** said suction cup holding means (23) consist of a lined series of suction cups (23) communicating with a vacuum source, and
- **in that** said pushing means (24) consist of a series of aligned freely rotatable rollers (24) positioned between the cutting line (T) and the suction cups (23).

2. The method of claim 1, **characterized in that** said suction cup holding means (23) are carried by a stationary structure, so that the raising of said pushing means (24) causes a bending deformation of the part of the sheet (21a) that protrudes beyond the suction cup holding means (23).

3. The method of claim 1, **characterized in that** said suction cup holding means (23) are vertically movable together with the pushing means (24).

4. The method of claim 1, **characterized in that** said lined series of suction cups means (23) is carried by a bar (25) which extends parallel to the cutting line (T) and is located downstream of said cutting line (T) on the side of the first portion (21).

## Patentansprüche

1. Verfahren zum Schneiden einer laminierten Glasplatte (2) entlang vorgegebener Linien, wobei die Platte eine obere Glasplatte (3), eine untere Glasplatte (4) und einen Zwischenfilm (5) aus Kunststoffmaterial enthält und das Verfahren die folgenden Schritte einschließt:
- Herstellen von Einschnitten in beiden Glasplatten (3, 4) entlang einer vorgegebenen Schnittlinie (T), wobei die Einschnitte hergestellt werden, indem entsprechende Scheibenschneider (16, 18) über die Glasscheiben (3, 4) geführt werden, wobei die Schneider (16, 18) simultan in einer ersten Richtung entlang der Schnittlinie (T) bewegt werden;
- Bewegen einer Druckwalze (17) über die obere Glasplatte (3) in der zu der vorhergehenden Bewegung entgegengesetzten Richtung, so dass bewirkt wird, dass die untere Glasplatte (4) abbricht;
- Anheben eines ersten Abschnitts (21) der laminierten Platte (2), der sich an einer Seite der Schnittlinie (T) befindet, mittels der nach oben gerichteten Verschiebung von Trageeinrichtungen (23, 24), die mit der unteren Glasplatte (4) zusammenwirken;
- Ausüben eines vorgegebenen, nach unten gerichteten Drucks auf einen zweiten Abschnitt (20) der laminierten Glasplatte (2), der sich an der dem ersten Abschnitt (21) gegenüberliegenden Seite der Schnittlinie (T) befindet, mittels eines Druckelementes (12), das zum Zusammenwirken mit der oberen Platte (3) des zweiten Abschnitts (20) gebracht wird, um zu bewirken, dass die obere Platte (3) abbricht; und
- Trennen des Zwischenfilms (5) durch örtlich begrenztes Erhitzen (22) desselben entlang der Schnittlinie (T),
**dadurch gekennzeichnet, dass**
- vor dem Schritt des Anhebens des ersten Abschnitts (21) der laminierten Glasplatte (2) die untere Fläche des ersten Abschnitts (21) mit Saugnapf-Halteeinrichtungen (23) in Eingriff gebracht wird,
- mit den Saugnapf-Halteinrichtungen (23) Schiebeeinrichtungen (24) verbunden sind, die vertikal bewegt werden können, um mit der unteren Fläche des ersten Abschnitts (21) in Eingriff zu kommen und ihn nach oben anzuheben,
- die Saugnapf-Halteeinrichtungen (23) aus einer linienförmigen Reihe von Saugnäpfen (23) bestehen, die mit einer Vakuumquelle in Verbindung stehen,
- die Schiebeeinrichtungen (24) aus einer Reihe fluchtender, frei drehbarer Rollen (24) bestehen, die zwischen der Schnittlinie (T) und den Saugnäpfen (23) positioniert sind.

2. Verfahren nach Anspruch 1, **dadurch gekennzeichnet, dass** die Saugnapf-Halteeinrichtungen (23) von einer stationären Struktur getragen werden, so dass das Anheben der Schiebeeinrichtungen (24) eine Biegeverformung des Teils der Platte (21a) bewirkt, der über die Saugnapf-Halteeinrichtungen (23) hinaus vorsteht.

3. Verfahren nach Anspruch 1, **dadurch gekennzeichnet, dass** die Saugnapf-Halteeinrichtungen (23) zusammen mit den Schiebeeinrichtungen (24) vertikal bewegt werden können.

4. Verfahren nach Anspruch 1, **dadurch gekennzeichnet, dass** die linienförmige Reihe von Saugnapfeinrichtungen (23) von einer Schiene (25) getragen wird, die sich parallel zu der Schnittlinie (T) erstreckt und die der Schnittlinie (T) nachgelagert an der Seite des ersten Abschnitts (21) angeordnet ist.

## Revendications

1. Procédé pour couper une feuille de verre feuilletée (2) le long de lignes prédéterminées, la feuille comportant une feuille de verre supérieure (3), une feuille de verre inférieure (4) et un film intermédiaire (5) en matériau plastique synthétique, ledit procédé comportant les étapes suivantes :
- faire des incisions dans les deux feuilles de verre (3, 4) le long d'une ligne de coupe prédéterminée (T), les incisions étant effectuées par le passage des disques coupeurs respectifs (16, 18) à travers les feuilles de verre (3, 4), les coupeurs (16, 18) déplacés simultanément dans une première direction le long de la ligne de coupe (T) ;
- déplacer un rouleau presseur (17) sur la partie supérieure de la feuille de verre (3) dans le sens opposé au mouvement précédent et de manière à amener la feuille de verre inférieure (4) à se détacher ;
- élever une première partie (21) de la feuille de verre feuilletée (2) qui se trouve sur un côté de la ligne de coupe (T) au moyen du déplacement vers le haut de moyens de support (23, 24) qui coopèrent avec la feuille de verre inférieure (4) ;
- exercer une pression prédéterminée vers le bas contre une deuxième partie (20) de la feuille feuilletée (2) qui se trouve du côté opposé de la ligne de coupe (T) à partir de la première partie (21) au moyen d'un élément de pression (12) mis en coopération avec la feuille supérieure (3) de la deuxième partie (20) de manière à amener la feuille supérieure (3) à se détacher ; et
- découper le film intermédiaire (5) par chauffage localisé (22) le long de la ligne de coupe (T),
**caractérisé en ce que**
- avant ladite étape d'élévation de la première partie (21) de la feuille de verre feuilleté (2), la surface inférieure de ladite première partie (21) est engagée par des moyens de maintien de ventouse (23)
- **en ce qu'**il y a des moyens de poussée (24) associés auxdits moyens de maintien de ventouse (23), verticalement mobiles pour engager ladite surface inférieure de la première partie (21) et pour l'élever vers le haut,
- **en ce que** lesdits moyens de maintien de ventouse (23) se composent d'une série doublée de ventouses (23) communiquant avec une source de vide, et
- **en ce que** lesdits moyens de poussée (24) se composent d'une série de rouleaux librement rotatifs alignés (24) positionnés entre la ligne de coupe (T) et les ventouses (23).

2. Procédé selon la revendication 1, **caractérisé en ce que** lesdits moyens de maintien de ventouse (23) sont portés par une structure stationnaire, de sorte que l'élévation desdits moyens de poussée (24) provoque une déformation par flexion de la partie de la feuille (21a) qui fait saillie au-delà des moyens de maintien de ventouse (23).

3. Procédé de la revendication 1, **caractérisé en ce que** lesdits moyens de maintien de ventouse (23) sont mobiles verticalement ensemble avec les moyens de poussée (24).

4. Procédé de la revendication 1, **caractérisé en ce que** ladite série doublée de moyens de ventouse (23) est portée par une barre (25) qui s'étend parallèlement à la ligne de coupe (T) et est située en aval de ladite ligne de coupe (T) sur le côté de la première partie (21).
